# EUROPEAN PATENT SPECIFICATION

(11) **EP 2 782 784 B1**
(45) Date of publication and mention of the grant of the patent: **04.01.2017**
(21) Application number: 12852324.8
(22) Date of filing: 22.11.2012
(51) Int. Cl.: B60R 7/06, B65D 43/26, B65D 43/16

(54) **LIFTING DEVICE FOR VEHICLE-MOUNTED EQUIPMENT AND VEHICLE HAVING THE SAME**
HEBEVORRICHTUNG FÜR FAHRZEUGMONTIERTE VORRICHTUNG UND FAHRZEUG DAMIT
DISPOSITIF DE LEVAGE POUR ÉQUIPEMENT MONTÉ DANS UN VÉHICULE ET VÉHICULE LE COMPORTANT

(30) Priority: 25.11.2011 CN 201110379949
(43) Date of publication of application: 01.10.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: ZHONG, Yilin, Shenzhen Guangdong 518118 (CN); BAI, Junming, Shenzhen Guangdong 518118 (CN); DAI, Jun, Shenzhen Guangdong 518118 (CN); FANG, Lei, Shenzhen Guangdong 518118 (CN); GAO, Jingjing, Shenzhen Guangdong 518118 (CN)
(74) Representative: Gulde & Partner
(86) International application number: PCT/CN2012/085003
(87) International publication number: WO 2013/075632

(56) References cited:
- CN-A- 101 992 713
- CN-A- 102 085 831
- CN-U- 201 694 114
- CN-U- 202 279 055
- DE-A1- 10 008 887
- DE-U1- 20 005 552
- JP-A- H 089 277
- JP-A- 2003 165 389
- US-A1- 2006 108 820

## Description

### FIELD

The present disclosure generally relates to a lifting device for vehicle-mounted equipment and a vehicle having the same.

### BACKGROUND

Recently, more and more vehicle-mounted equipments are mounted on the vehicle. Conventional vehicle-mounted equipments are mounted in the dashboard of the vehicle, and extended out of the dashboard when it is in use and retracted into the dashboard when it is not in use. However, after the vehicle-mounted equipment is retracted into the dashboard, the opening in the dashboard may affect the appearance integrality of the dashboard, and the aesthetic of the interior of the vehicle, and the vehicle-mounted equipment is not capable to be inosculated to the vehicle, thus reducing the humanization, and intelligentization of the vehicle.

DE 100 08 887 A1 discloses a lifting device according to the preamble of claim 1.

### SUMMARY

The problem to be solved by the present invention can be seen as how to increase the stability of the lifting device.

This problem is solved by a lifting device comprising the features of claim 1.

Preferably, the power unit is a motor having an output shaft provided with a motor gear, and the transmission mechanism comprises an input gear meshed with the motor gear, a worm coaxial with the input gear, an intermediate gear meshed with the worm, and an output gear coaxial with the intermediate gear and meshed with the toothed bar.

Preferably, the first rotating arm comprises a first mounting ring, and first and second rotating rods connected to the first mounting ring respectively and forming an angle a therebetween from the first rotating rod to the second rotating rod in a clockwise direction, and the second rotating arm comprises a second mounting ring, third and fourth rotating rods connected to the second mounting ring respectively and forming the angle a therebetween in the clockwise direction from the third rotating rod to the fourth rotating rod.

Preferably, the angle a ranges from about 100 degrees to about 150 degrees.

Preferably, the bottom surface of the cover plate is fixed to a first end of the first rotating rod away from the first mounting ring and a first end of the third rotating rod away from the second mounting ring, wherein a top surface of the cover plate is flush with an outer surface of the dashboard in the retracted position.

Preferably, the guiding column structure comprises first and second sliding columns disposed on second ends of the first and second rotating arm respectively.

Preferably, the guiding structure comprises first and second guiding grooves formed in outer sidewalls of the lifting-box body respectively, wherein the first sliding column is slidably fitted in the first guiding groove, and the second sliding column is slidably fitted in the second guiding groove.

Preferably, the first guiding groove comprises a first vertical groove portion extended vertically and a first horizontal groove portion communicated with and perpendicular to the first vertical groove portion, and the second guiding groove comprises a second vertical groove portion extended vertically and a second horizontal groove portion communicated with and perpendicular to the first vertical groove portion.

According to another embodiment of the present disclosure, a vehicle comprising above lifting device for vehicle-mounted equipment is provided.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings in which:
Fig. 1 is an exploded view of a lifting device for vehicle-mounted equipment according to an embodiment of the present disclosure;
Fig.2 is a partial schematic view of the lifting device according to an embodiment of the present disclosure;
Fig.3 is a schematic view of the motion process of a lifting device according to an embodiment of the present disclosure;
Fig.4 is a schematic view of the cover-flipping mechanism of a lifting device according to an embodiment of the present disclosure; and
Fig.5 is a schematic view of the power mechanism of a lifting device according to an embodiment of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

In the description, relative terms such as "longitudinal", "transversal", "front", "rear", "right", "left", "lower", "upper", "horizontal", "vertical", "above", "below", "up", "top", "bottom" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation. Terms concerning attachments, coupling and the like, such as "connected" and "interconnected", refer to a relationship, in which structures are secured or attached to one another either directly or indirectly through intervening structures, as well as both movable or rigid attachments or relationships, unless expressly described otherwise.

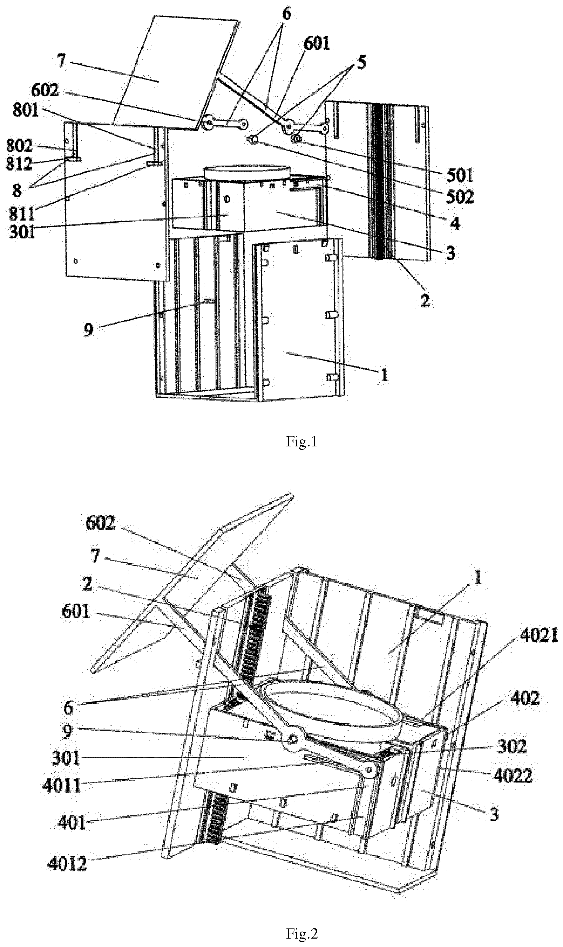

As shown in Figs. 1-5, a lifting device for vehicle-mounted equipment according to embodiments of the present disclosure, comprises: a housing 1, cover-flipping mechanism 6 and a lifting-box assembly 3 onto which the vehicle-mounted equipment is adapted to be mounted. In some embodiments, the vehicle-mounted equipment (not shown) may be a vehicle-mounted robot, a driving reminder, or a vehicle-mounted GPS, etc.

The housing 1 is adapted to be disposed in a dashboard 10 having an opening for the vehicle-mounted equipment passing through. The cover-flipping mechanism 6 is disposed pivotably in the housing 1 and has a first end provided with a cover plate 7 for opening and closing the opening.

The lifting-box assembly 3 is disposed in the housing 1, connected to a second end of the cover-flipping mechanism 6, and configured to be vertically movable between an extended position in which the cover plate 7 opens the opening and the vehicle-mounted equipment is extended out of the dashboard 10 through the opening, and a retracted position in which the vehicle-mounted equipment is retracted into the dashboard 10 through the opening and the cover plate 7 closes the opening.

With the lifting device according to embodiments of the present disclosure, the opening may be opened so that the vehicle-mounted equipment may be extended out of the dashboard 10 when it is needed to use the vehicle-mounted equipment, and the opening may be closed by the cover plate 7 after the vehicle-mounted equipment is retracted into the dashboard 10 when the vehicle-mounted equipment is not needed to use, thus ensuring the appearance integrality of the dashboard, preventing the dust from entering the dashboard, and improving the inosculation of the vehicle-mounted equipment to the vehicle and the humanization and intelligentization of the vehicle.

According to the invention, as shown in Fig.2, the lifting-box assembly 3 comprises a lifting-box body 301 and a power mechanism 302 disposed in the lifting-box body 301 for driving the lifting-box body 301 to move between the extended position and the retracted position. The power mechanism 302 comprises a power unit and a transmission mechanism 13 connected to the power unit. Correspondingly, each of two opposing inner sidewalls of the housing 1 has a toothed bar 2 extended vertically and meshed with the transmission mechanism 13, thus facilitating the ascending and descending of the lifting-box assembly 3 along the vertical direction.

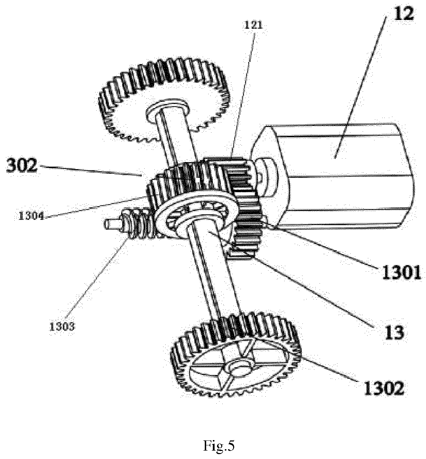

More specifically, the power unit may be a motor 12. As shown in Fig.5, a motor gear 121 is provided on an output shaft of the motor 12. The transmission mechanism 13 comprises an input gear 1301, a worm 1303, an intermediate gear 1304 and an output gear 1302.The input gear 1301 is meshed with the motor gear 121.The worm 1303 is coaxial with the input gear 1301. The intermediate gear 1304 is meshed with the worm 1303. And the output gear 1302 is coaxial with the intermediate gear 1304 and meshed with the toothed bar 2. Therefore, with the engagements between the input gear 1301 and the motor gear 121, and between the output gear 1302 and the toothed bar 2, the lifting-box body 301 can move along the vertical direction.

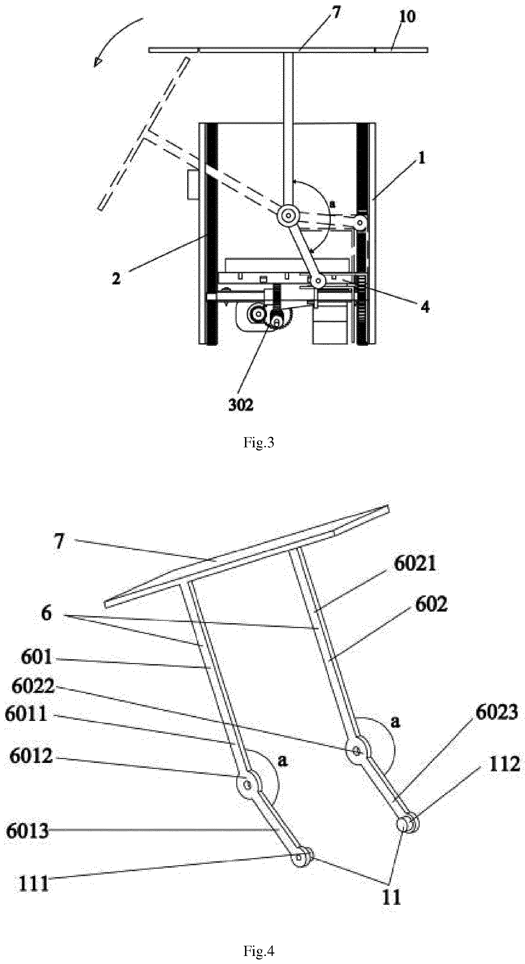

As shown in Figs. 2 and 3, a sidewall of the lifting-box body 301 is provided with a guiding structure 4. The second end of the cover-flipping mechanism 6 is provided with a guiding column structure 11 fitted slidably in the guiding structure 4 so that the lifting-box assembly 3 may drive the guiding column structure 11 to pivot the cover-flipping mechanism 6 via the guiding structure 4. Therefore, the lifting of the lifting-box assembly 3 may cause the guiding column structure 11 to slide along the guiding structure 4, and the cover-flipping mechanism 6 to pivot, so that the opening and closing of the opening are realized by the ascending and descending of the vehicle-mounted equipment respectively.

As shown in Figs. 1 and 2, an inner side of each sidewall of the housing 1 is provided with a rotating shaft 9 onto which the cover-flipping mechanism 6 is pivotably mounted. Referring to Fig.4, the cover-flipping mechanism 6 comprises first and second rotating arms 601, 602 parallel to each other and pivotably mounted onto the rotating shaft 9 respectively. The cover plate 7 is connected to a first end of each of the first and second rotating arms 601, 602.

As shown in Fig.4, the first rotating arm 601 comprises a first mounting ring 6012, and first and second rotating rods 6011, 6013, the first and second rotating rods 6011, 6013 are connected to the first mounting ring 6012 respectively and form an angle a therebetween from the first rotating rod 6011 to the second rotating rod 6013 in a clockwise direction as shown in Fig. 4. Similarly, the second rotating arm 602 comprises a second mounting ring 6022, and third and fourth rotating rods 6021, 6023, the third and fourth rotating rods 6021, 6023 are connected to the second mounting ring 6022 respectively and form the angle a therebetween in the clockwise direction from the third rotating rod 6021 to the fourth rotating rod 6023 as shown in Fig. 4. The first mounting ring 6012 and the second mounting ring 6022 are pivotably mounted onto the rotating shaft 9 respectively, thus causing the first rotating arm 601 and the second rotating arm 602 to pivot about the rotating shaft 9 respectively. Preferably, the angle a may range from about 100 degrees to about 150 degrees.

One side of the cover plate 7 is fixed to a first end of the first rotating rod 6011 away from the first mounting ring 6012, and the other side of the cover plate 7 is fixed to a first end of the third rotating rod 6021 away from the second mounting ring 6022. A top surface of the cover plate 7 is flush with an outer surface of the dashboard 10 in the retracted position, and the cover plate 7 is received in the opening of the dashboard.

In some embodiments of the present disclosure, as shown in Fig.4, the guiding column structure 11 comprises first and second sliding columns 111, 112 disposed on second ends of the first and second rotating arm 601, 602 respectively.

Moreover, as shown in Fig. 2, the guiding structure 4 comprises first and second guiding grooves 401, 402 formed in opposite outer sidewalls (the front sidewall and back sidewall in Fig. 2) of the lifting-box body 301 respectively. The first sliding column 111 is slidably fitted in the first guiding groove 401, and the second sliding column 112 is slidably fitted the second guiding groove 402. By cooperation between the guiding column structure 11 and the guiding structure 4, the guiding column structure 11 may slide in the guiding structure 4, thus guiding the pivoting of the cover-flipping mechanism 6.

As shown in Figs. 2 and 3, in a particular embodiment of the present disclosure, the first guiding groove 401 comprises a first vertical groove portion 4012 extended vertically and a first horizontal groove portion 4011 connected with and perpendicular to the first vertical groove portion 4012. Similarly, the second guiding groove 402 comprises a second vertical groove portion 4022 extended vertically and a second horizontal groove portion 4021 connected with and perpendicular to the first vertical groove portion 4022.

The ascending of the lifting-box assembly 3 comprises first and second ascending stages and the descending of the lifting-box assembly 3 comprises first and second descending stages.

Particularly, at the first ascending stage, the lifting-box assembly 3 is moved upwardly from the retracted position towards the extended position, the first and second sliding columns 111, 112 slide rightward in Fig. 3 in the first horizontal groove portion 4011 and the second horizontal groove portion 4021 respectively, that is, the first and second sliding columns 111, 112 moves rightward until they reach the upper ends of the first vertical groove portion 4012 and the second vertical groove portion 4022 respectively, at the same time, the cover-flipping mechanism 6 is driven to rotate in the anti-clockwise direction in Fig. 3 and the opening is opened totally by the cover plate 7. At the second ascending state, the lifting-box assembly 3 is moved continuously upwardly, at the same time, the first and second sliding columns 111, 112 slide downwardly in the first vertical groove portion 4012 and the second vertical groove portion 4022 respectively without driving the cover-flipping mechanism 6 to rotate, and finally the lifting-box assembly 3 reaches the extended position.

On the contrary, at the first descending stage, the lifting-box assembly 3 is moved downwardly from the extended position towards to the retracted position, the first and second sliding columns 111, 112 slide upwardly in the first vertical groove portion 4012 and the second vertical groove portion 4022 towards to the right ends (in Fig. 3) of the first horizontal groove portion 4011 and the second horizontal groove portion 4021 respectively, without driving the cover-flipping mechanism 6 to rotate. At the second descending stage, the lifting-box assembly 3 is continuously moved downwardly, at the same time, the first and second sliding columns 111, 112 slide leftward in the first horizontal groove portion 4011 and the second horizontal groove portion 4021 respectively with driving the cover-flipping mechanism 6 to rotate and driving the cover plate 7 to close the opening, finally, the first and second sliding columns 111, 112 reach the left ends of the first horizontal groove portion 4011 and the second horizontal groove portion 4021 respectively, the lifting-box assembly 3 reaches the retracted position and the cover plate 7 closes the opening totally.

In brief, the cover-flipping mechanism 6 is driven and guided by the first horizontal groove portion 4011 and the second horizontal groove portion 4021 during the ascending and descending of the lifting-box assembly 3.

Furthermore, as shown in Fig.1 a position limit structure 8 is disposed on an upper edge of a sidewall of the housing 1 and comprises first and second position limit grooves 801, 802 extended downwardly from top surfaces of the sidewall of the housing respectively. A first position limit block 811 is disposed on the sidewall of the housing at a bottom end of the first position limit groove 801, and a second limit block 812 is disposed on the side wall of the housing at a bottom end of the second position limit groove 802. Therefore, the first rotating arm 601 is adapted to be fitted within the first limit groove 801 so that the position of the first rotating arm 601 is limited, and the second rotating arm 602 is adapted to be fitted within the second position limit groove 802 so that the position of the second rotating arm 602 is limited.

Particularly, the first rotating rod 6011 is cooperated with the first position limit grooves 801 and moves along the vertical first position limit grooves 801 until the first rotating rod 6011 reaches the bottom of the first position limit grooves 801, thus limiting the position of the first rotating rod 6011. Furthermore, the first position limit block 811 may increase the contact area between the first rotating rod 6011 and the position limit structure 8 when the first rotating rod 6011 is moved to the bottom of the first position limit grooves 801, thus enhancing stability of the position limiting.

Similarly, the third rotating rod 6021 is cooperated with the second position limit groove 802 and moves along the vertical second position limit groove 802 until the third rotating rod 6021 reaches the bottom of the second position limit groove 802, thus limiting the position of the third rotating rod 6021. Furthermore, the second limit block 812 may increase the contact area between the third rotating rod 6021 and the position limit structure 8 when the third rotating rod 6021 is moved to the bottom of the second position limit groove 802, thus enhancing stability of position limiting.

The operation of the lifting device according to embodiments of the present disclosure will be described in detail with reference to Figs. 1-4.

When it is desired to use and extend the vehicle-mounted equipment out of the dashboard through the opening, the lifting-box assembly 3 is moved upwardly in the vertical direction from the retracted position, via the engagement between the power mechanism 302 disposed in the lifting-box body 301 and the toothed bar 2. Simultaneously, the first and second sliding columns 111, 112 disposed on two sides of the cover-flipping mechanism 6 and may slide in the first horizontal groove portion 4011 and the second horizontal groove portion 4021, towards to the upper ends of the first vertical groove portion 4012 and the second vertical groove portion 4022 (i.e. towards the right direction in Fig.3) respectively. Accordingly, the cover-flipping mechanism 6 is driven to pivot and thus the cover plate 7 is overturned. Subsequently, the lifting-box assembly 3 is moved continuously upwardly, while the first and second sliding columns 111, 112 slide downwardly in the first vertical groove portion 4012 and the second vertical groove portion 4022 respectively without driving the cover-flipping mechanism 6 to rotate, Finally, the opening of the dashboard 10 is totally opened and the lifting-box assembly 3 reaches the extended position. That is, the cover plate 7 opens the opening and the vehicle-mounted equipment is extended out of the dashboard 10 through the opening.

When the vehicle-mounted equipment is not needed to use and it is desired to retract the vehicle-mounted equipment into the dashboard 10 through the opening, the lifting-box assembly 3 moves downwardly in the vertical direction, via the engagement between the power mechanism 302 in the lifting-box body 301 and the toothed bar 2. Simultaneously, the first and second sliding columns 111, 112 disposed on two sides of the cover-flipping mechanism 6 slide firstly and downwardly in the first vertical groove portion 4012 and the second vertical groove portion 4022 respectively without driving the cover-flipping mechanism 6 to pivot. Secondly, the first and second sliding columns 111, 112 slide leftward in the first horizontal groove portion 4011 and the second horizontal groove portion 4021 respectively thus driving the cover-flipping mechanism 6 to pivot. Finally, the lifting-box assembly 3 reaches the retracted position and the opening of the dashboard 10 is totally closed. Therefore, the opening of the dashboard 10 is opened or closed according to the ascending and descending of the lifting-box assembly 3. Accordingly, the opening of the dashboard 10 is closed after the vehicle-mounted equipment being retracted into the dashboard 10, thus ensuring the appearance integrality of the dashboard 10.

A vehicle according to some embodiments of the present disclosure comprises: the lifting device for vehicle-mounted equipment described with reference to the above embodiments; and a vehicle-mounted equipment disposed on the lifting-box assembly 3 of the lifting device.

With the vehicle according to the embodiments of the present disclosure, the vehicle-mounted equipment may be extended out of the dashboard and retract into the dashboard, thus ensuring the appearance integrality of the dashboard 10, preventing the dust entering into the dashboard, and improving the humanization and intelligentization.

Although explanatory embodiments have been shown and described, it would be appreciated by those skilled in the art that the above embodiments can not be construed to limit the present disclosure, and changes, alternatives, and modifications can be made in the embodiments without departing from the scope of the invention as defined by the claims.

## Claims

1. A lifting device for vehicle-mounted equipment, comprising:
a housing (1) adapted to be disposed in an opening of a dashboard of a vehicle;
a cover-flipping mechanism (6) disposed pivotably in the housing (1) and having a first end with a cover plate (7) for opening and closing the opening; and
a lifting-box assembly (3), adapted to accommodate the vehicle-mounted equipment, the lifting-box assembly (3) being disposed in the housing (1), connected to a second end of the cover-flipping mechanism (6), and configured to be vertically movable between an extended position wherein the cover plate (7) opens the opening and the vehicle-mounted equipment is extended out of the dashboard (10) through the opening, and a retracted position wherein the vehicle-mounted equipment is retracted into the dashboard (10) through the opening and the cover plate (7) closes the opening, wherein an inner side of each sidewall of the housing (1) is provided with a rotating shaft (9) on which the cover-flipping mechanism (6) is pivotably mounted;
wherein the cover-flipping mechanism (6) comprises first and second rotating arms (601, 602) parallel to each other and pivotably mounted on the rotating shaft (9) respectively, and wherein the cover plate (7) is connected to a first end of each of the first and second rotating arms (601, 602), **characterized in that**
the lifting-box assembly (3) comprises:
a lifting-box body (301); and
a power mechanism (302) disposed in the lifting-box body (301) for driving the lifting-box body (301) to move between the extended position and the retracted position, and including a power unit (12) and a transmission mechanism (13) connected to the power unit (12); wherein each of two opposing inner sidewalls of the housing (1) has a toothed bar (2) extended vertically and meshed with the transmission mechanism (13);
wherein a sidewall of the lifting-box body (301) is provided with a guiding structure (4),
wherein the second end of the cover-flipping mechanism (6) is provided with a guiding column structure (11) fitted slidably in the guiding structure (4) so that the lifting-box assembly (3) drives the guiding column structure (11) via the guiding structure (4) to pivot the cover-flipping mechanism (6);
wherein a position limit structure (8) is disposed on an upper edge of a sidewall of the housing (1) and comprises first and second position limit grooves (801, 802) extended downwardly from top surfaces of the sidewall of the housing (1) respectively,
wherein a first position limit block (811) is disposed on the sidewall of the housing (1) at a bottom end of the first position limit groove (801), and a second limit block (812) is disposed on the side wall of the housing (1) at a bottom end of the second position limit groove (802), and
wherein the first rotating arm (601) is adapted to be fitted within the first limit groove (801) so as to limit the position of the first rotating arm (601), and the second rotating arm (602) is adapted to be fitted within the second position limit groove (802) so as to limit the position of the second rotating arm (602).

2. The lifting device according to claim 1, wherein the power unit (12) is a motor having an output shaft provided with a motor gear (121); and
wherein the transmission mechanism (13) comprises an input gear (1301) meshed with the motor gear (121), a worm (1303) coaxial with the input gear (121), an intermediate gear (1304) meshed with the worm (1303), and an output gear (1302) coaxial with the intermediate gear (1304) and meshed with the toothed bar (2).

3. The lifting device according to claim 1, wherein the first rotating arm (601) comprises a first mounting ring (6012), and first and second rotating rods (6011, 6013) connected to the first mounting ring (6012) respectively and forming an angle a therebetween from the first rotating rod (6011) to the second rotating rod (6013) in a clockwise direction,
wherein the second rotating arm (602) comprises a second mounting ring (6022), third and fourth rotating rods (6021, 6023) connected to the second mounting ring (6022) respectively and forming the angle a therebetween in the clockwise direction from the third rotating rod (6021) to the fourth rotating rod (6023).

4. The lifting device according to claim3, wherein the angle a ranges from 100 degrees to 150 degrees.

5. The lifting device according to claim 4, wherein a bottom surface of the cover plate (7) is fixed to a first end of the first rotating rod (6011) away from the first mounting ring (6012) and a first end of the third rotating rod (6021) away from the second mounting ring (6022.

6. The lifting device according to claim 5, wherein the guiding column structure (11) comprises first and second sliding columns (111, 112) disposed on second ends of the first and second rotating arm (601, 602) respectively.

7. The lifting device according to claim 6, wherein the guiding structure (4) comprises first and second guiding grooves (401, 402) formed in outer sidewalls of the lifting-box body (301) respectively,
wherein the first sliding column (111) is slidably fitted in the first guiding groove (401), and the second sliding column (112) is slidably fitted in the second guiding groove (402).

8. The lifting device according to claim 7, wherein the first guiding groove (401) comprises a first vertical groove portion (4012) extended vertically and a first horizontal groove portion (4011) connected with and perpendicular to the first vertical groove portion (4012),
wherein the second guiding groove (402) comprises a second vertical groove portion (4022) extended vertically and a second horizontal groove portion (4021) connected with and perpendicular to the first vertical groove portion (4022).

9. A vehicle, comprising:
a lifting device for vehicle-mounted equipment according to any of claims 1-8, the lifting device being mounted in an opening of the dashboard (10) of the vehicle; and
a vehicle-mounted equipment disposed on the lifting-box assembly (3) of the lifting device.

10. The vehicle according to claim 9, wherein a top surface of the cover plate (7) is flush with an outer surface of the dashboard (10) in the retracted position.

## Patentansprüche

1. Hebevorrichtung für eine fahrzeugmontierte Vorrichtung, aufweisend:
ein Gehäuse (1), das angepasst ist, um in einer Öffnung eines Armaturenbretts eines Fahrzeugs angeordnet zu werden;
einen Deckel-Wendemechanismus (6), der im Gehäuse (1) schwenkbar angeordnet ist und ein erstes Ende mit einer Deckplatte (9) zum Öffnen und Schließen der Öffnung aufweist; und
eine Hebekastenanordnung (3), die angepasst ist, um die fahrzeugmontierte Vorrichtung aufzunehmen, wobei die Hebekastenanordnung (3) im Gehäuse (1) angeordnet ist, mit einem zweiten Ende des Deckel-Wendemechanismus (6) verbunden ist und konfiguriert ist, um vertikal zwischen einer ausgefahrenen Position, in der die Deckplatte (7) die Öffnung öffnet und sich die fahrzeugmontierte Vorrichtung durch die Öffnung aus dem Armaturenbrett (10) erstreckt, und einer zurückgezogenen Position, in der die fahrzeugmontierte Vorrichtung durch die Öffnung in das Armaturenbrett (10) zurückgezogen ist und die Deckplatte (7) die Öffnung schließt, bewegbar zu sein, wobei eine Innenseite jeder Seitenwand des Gehäuses (1) mit einer Drehwelle (9), auf der der Deckel-Wendemechanismus (6) schwenkbar montiert ist, bereitgestellt wird;
wobei der Deckel-Wendemechanismus (6) einen ersten und zweiten Dreharm (601, 602), die parallel zueinander sind und jeweils schwenkbar auf der Drehwelle (9) montiert sind, aufweist, und wobei die Deckplatte (7) mit einem ersten Ende jedes des ersten und zweiten Dreharms (601, 602) verbunden ist, **dadurch gekennzeichnet, dass** die Hebekastenanordnung (3) aufweist:
einen Hebekastenkörper (301); und
einen im Hebekastenkörper (301) angeordneten Antriebsmechanismus (302) zum Antreiben des Hebekastenkörpers (301), so dass er sich zwischen der ausgefahrenen Position und der zurückgezogenen Position bewegt, und der eine Antriebseinheit (12) und einen Übertragungsmechanismus (13), der mit der Antriebseinheit (12) verbunden ist, aufweist; wobei jede von zwei gegenüberliegenden inneren Seitenwänden des Gehäuses (1) eine Zahnstange (2), die sich vertikal erstreckt und mit dem Übertragungsmechanismus (13) in Eingriff steht, aufweist;
wobei eine Seitenwand des Hebekastenkörpers (301) mit einer Führungsstruktur (4) bereitgestellt wird,
wobei das zweite Ende des Deckel-Wendemechanismus (6) mit einer Führungssäulenstruktur (11), die verschiebbar in der Führungsstruktur (4) eingepasst ist, bereitgestellt wird, so dass die Hebekastenanordnung (3) die Führungssäulenstruktur (11) über die Führungsstruktur (4) antreibt, um den Deckel-Wendemechanismus (6) zu schwenken;
wobei eine Positionsbegrenzungsstruktur (8) auf einem oberen Rand einer Seitenwand des Gehäuses (1) angeordnet ist und eine erste und zweite Positionsbegrenzungsnut (801, 802), die sich jeweils von Oberseiten der Seitenwand des Gehäuses (1) nach unten erstrecken, aufweist,
wobei ein erster Positionsbegrenzungsblock (811) auf der Seitenwand des Gehäuses (1) an einem unteren Ende der ersten Positionsbegrenzungsnut (801) angeordnet ist und ein zweiter Begrenzungsblock (812) auf der Seitenwand des Gehäuses (1) an einem unteren Ende der zweiten Positionsbegrenzungsnut (802) angeordnet ist, und
wobei der erste Dreharm (601) angepasst ist, um in die erste Begrenzungsnut (801) einpasst zu werden, um die Position des ersten Dreharms (601) zu begrenzen, und der zweite Dreharm (602) angepasst ist, um in die zweite Positionsbegrenzungsnut (802) eingepasst zu werden, um die Position des zweiten Dreharms (602) zu begrenzen.

2. Hebevorrichtung nach Anspruch 1, wobei die Antriebseinheit (12) ein Motor, der eine Ausgangswelle, die mit einem Motorzahnrad (121) bereitgestellt wird, ist; und
wobei der Übertragungsmechanismus (13) ein Eingangszahnrad (1301), das mit dem Motorzahnrad (121) in Eingriff steht, eine Schnecke (1303), die koaxial mit dem Eingangszahnrad (121) ist, ein Zwischenzahnrad (1304), das mit der Schnecke (1303) in Eingriff steht, und ein Ausgangszahnrad (1302), das koaxial mit dem Zwischenzahnrad (1304) ist und mit der Zahnstange (2) in Eingriff steht, aufweist.

3. Hebevorrichtung nach Anspruch 1, wobei der erste Dreharm (601) einen ersten Befestigungsring (6012) und eine erste und zweite Drehstange (6011, 6013), die jeweils mit dem ersten Befestigungsring (6012) verbunden sind und zwischen sich einen Winkel a von der ersten Drehstange (6011) zur zweiten Drehstange (6013) im Uhrzeigersinn ausbilden, aufweist,
wobei der zweite Dreharm (602) einen zweiten Befestigungsring (6022), eine dritte und vierte Drehstange (6021, 6023), die jeweils mit dem zweiten Befestigungsring (6022) verbunden sind und zwischen sich den Winkel a im Uhrzeigersinn von der dritten Drehstange (6021) zur vierten Drehstange (6023) ausbilden, aufweist.

4. Hebevorrichtung nach Anspruch 3, wobei der Winkel a in einem Bereich von 100 Grad bis 150 Grad liegt.

5. Hebevorrichtung nach Anspruch 4, wobei eine Unterseite der Deckplatte (7) an einem vom ersten Befestigungsring (6012) entfernten ersten Ende der ersten Drehstange (6011) und an einem vom zweiten Befestigungsring (6022) entfernten ersten Ende der dritten Drehstange (6021) befestigt ist.

6. Hebevorrichtung nach Anspruch 5, wobei die Führungssäulenstruktur (11) eine erste und zweite Gleitsäule (111, 112), die jeweils auf zweiten Enden des ersten und zweiten Dreharms (601, 602) angeordnet sind, aufweist.

7. Hebevorrichtung nach Anspruch 6, wobei die Führungsstruktur (4) eine erste und zweite Führungsnut (401, 402), die jeweils in äußeren Seitenwänden des Hebekastenkörpers (301) ausgebildet sind, aufweist,
wobei die erste Gleitsäule (111) verschiebbar in die erste Führungsnut (401) eingepasst ist und die zweite Gleitsäule (112) verschiebbar in die zweite Führungsnut (402) eingepasst ist.

8. Hebevorrichtung nach Anspruch 7, wobei die erste Führungsnut (401) einen ersten vertikalen Nutabschnitt (4012), der sich vertikal erstreckt, und einen ersten horizontalen Nutabschnitt (4011), der mit dem ersten vertikalen Nutabschnitt (4012) verbunden und perpendikulär zu diesem ist, aufweist,
wobei die zweite Führungsnut (402) einen zweiten vertikalen Nutabschnitt (4022), der sich vertikal erstreckt, und einen zweiten horizontalen Nutabschnitt (4021), der mit dem ersten vertikalen Nutabschnitt (4022) verbunden und perpendikulär zu diesem ist, aufweist.

9. Fahrzeug, aufweisend:
eine Hebevorrichtung für eine fahrzeugmontierte Vorrichtung nach einem der Ansprüche 1-8, wobei die Hebevorrichtung in einer Öffnung des Armaturenbretts (10) des Fahrzeugs montiert ist; und
eine fahrzeugmontierte Vorrichtung, die auf der Hebekastenanordnung (3) der Hebevorrichtung angeordnet ist.

10. Fahrzeug nach Anspruch 9, wobei in der zurückgezogenen Position eine Oberseite der Deckplatte (7) bündig mit einer Außenfläche des Armaturenbretts (10) ist.

## Revendications

1. Dispositif de levage pour un équipement monté dans un véhicule, comprenant :
un boîtier (1) conçu pour être disposé dans une ouverture d'un tableau de bord d'un véhicule ;
un mécanisme de basculement de capot (6) disposé de manière à pouvoir pivoter dans le boîtier (1) et ayant une première extrémité ayant une plaque de capot (7) pour ouvrir et fermer l'ouverture ; et
un ensemble de boîte de levage (3) conçu pour recevoir l'équipement monté dans un véhicule, l'ensemble de boîte de levage (3) étant disposé dans le boîtier (1), relié à une seconde extrémité du mécanisme de basculement de capot (6), et configuré de manière à pouvoir se déplacer verticalement entre une position étendue dans laquelle la plaque de capot (7) ouvre l'ouverture et l'équipement monté dans un véhicule est étendu hors du tableau de bord (10) à travers l'ouverture et une position rétractée dans laquelle l'équipement monté dans un véhicule est rétracté dans le bord de tableau (10) à travers l'ouverture et la plaque de capot (7) ferme l'ouverture, un côté intérieur de chaque paroi latérale du boîtier (1) étant pourvu d'un arbre rotatif (9) sur lequel le mécanisme de basculement de capot (6) est monté de manière à pouvoir pivoter ;
le mécanisme de basculement de capot (6) comprenant un premier et un second bras rotatifs (601, 602) parallèles entre eux et montés de manière à pouvoir pivoter sur l'arbre rotatif (9), respectivement, et la plaque de capot (7) étant reliée à une première extrémité de chacun du premier et du second bras rotatifs (601, 602), **caractérisé en ce que** l'ensemble de boîte de levage (3) comprend :
un corps de boîte de levage (301) ; et
un mécanisme d'entraînement (302) disposé dans le corps de boîte de levage (301) pour entraîner le corps de boîte de levage (301) de manière à se déplacer entre la position étendue et la position rétractée, et comprenant une unité d'entraînement (12) et un mécanisme de transmission (13) relié à l'unité d'entraînement (12) ; chacun de deux parois latérales intérieures opposées du boîtier (1) ayant une crémaillère (2) s'étendant verticalement et en prise avec le mécanisme de transmission (13) ;
une paroi latérale du corps de boîte de levage (301) étant pourvue d'une structure de guidage (4),
la seconde extrémité du mécanisme de basculement de capot (6) étant pourvue d'une structure de colonne de guidage (11) montée de manière à pouvoir coulisser dans la structure de guidage (4) de façon à ce que l'ensemble de boîte de levage (3) entraîne la structure de colonne de guidage (11) pour faire pivoter le mécanisme de basculement de capot (6) via la structure de guidage (4) ;
une structure de limitation de position (8) étant disposée sur un bord supérieur d'une paroi latérale du boîtier (1) et comprenant une première et une seconde rainures de limitation de position (801, 802) qui s'étendent vers le bas à partir de surfaces supérieures de la paroi latérale du boîtier (1) respectivement,
un premier bloc de limitation de position (811) étant disposé sur la paroi latérale du boîtier (1) au niveau d'une extrémité inférieure de la première rainure de limitation de position (801), et un second bloc de limitation (812) étant disposé sur la paroi latérale du boîtier (1) au niveau d'une extrémité inférieure de la seconde rainure de limitation de position (802), et
le premier bras rotatif (601) étant conçu pour s'emboîter dans la première rainure de limitation (801) de manière à limiter la position du premier bras rotatif (601), et le second bras rotatif (602) étant conçu pour s'emboîter dans la seconde rainure de limitation de position (802) de manière à limiter la position du second bras rotatif (602).

2. Dispositif de levage selon la revendication 1, dans lequel l'unité d'entraînement (12) est un moteur ayant un arbre de sortie pourvu d'un pignon moteur (121), et
dans lequel le mécanisme de transmission (13) comprend un pignon d'entrée (1301) en prise avec le pignon moteur (121), une vis sans fin (1303) coaxiale avec le pignon d'entrée (121), un pignon intermédiaire (1304) en prise avec la vis sans fin (1303), et un pignon de sortie (1302) coaxial avec le pignon intermédiaire (1304) et en prise avec la crémaillère (2).

3. Dispositif de levage selon la revendication 1, dans lequel le premier bras rotatif (601) comprend une première bague de montage (6012) et une première et une deuxième tiges rotatives (6011, 6013) reliées à la première bague de montage (6012), respectivement, et formant un angle a entre celles-ci de la première tige rotative (6011) à la deuxième tige rotative (6013) dans le sens des aiguilles d'une montre,
le second bras rotatif (602) comprenant une seconde bague de montage (6022), une troisième et une quatrième tiges rotatives (6021, 6023) reliées à la seconde bague de montage (6022), respectivement, et formant l'angle a entre celles-ci dans le sens des aiguilles d'une montre de la troisième tige rotative (6021) à la quatrième tige rotative (6023).

4. Dispositif de levage selon la revendication 3, dans lequel l'angle a est compris entre 100 dégrées et 150 dégrées.

5. Dispositif de levage selon la revendication 4, dans lequel une surface inférieure de la plaque de capot (7) est fixée à une première extrémité de la première tige rotative (6011) éloignée de la première bague de montage (6012) et à une première extrémité de la troisième tige rotative (6021) éloignée de la seconde bague de montage (6022).

6. Dispositif de levage selon la revendication 5, dans lequel la structure de colonne de guidage (11) comprend une première et une seconde colonnes coulissantes (111, 112) disposées sur des secondes extrémités du premier et du second bras rotatifs (601, 602), respectivement.

7. Dispositif de levage selon la revendication 6, dans lequel la structure de guidage (4) comprend une première et une seconde rainures de guidage (401, 402) formées dans des parois latérales extérieures du corps de boîte de levage (301), respectivement,
la première colonne coulissante (111) étant montée de manière à pouvoir coulisser dans la première rainure de guidage (401), et la seconde colonne coulissante (112) étant montée de manière à pouvoir coulisser dans la seconde rainure de guidage (402).

8. Dispositif de levage selon la revendication 7, dans lequel la première rainure de guidage (401) comprend une première partie de rainure verticale (4012) s'étendant verticalement et une première partie de rainure horizontale (4011) reliée à la première partie de rainure verticale (4012) et perpendiculaire à celle-ci,
la seconde rainure de guidage (402) comprenant une seconde partie de rainure verticale (4022) s'étendant verticalement et une seconde partie de rainure horizontale (4021) reliée à la première partie de rainure verticale (4022) et perpendiculaire à celle-ci.

9. Véhicule, comprenant :
un dispositif de levage pour un équipement monté dans un véhicule selon l'une des revendications 1-8, le dispositif de levage étant monté dans une ouverture du tableau de bord (10) du véhicule ; et
un équipement monté dans un véhicule disposé sur l'ensemble de boîte de levage (3) du dispositif de levage.

10. Véhicule selon la revendication 9, dans lequel une surface supérieure de la plaque de capot (7) affleure une surface extérieure de tableau de bord (10) dans la position rétractée.
